(19) Europäisches Patentamt
European Patent Office
Office européen des brevets

(11) **EP 3 904 020 A1**

(12) **EUROPEAN PATENT APPLICATION**
published in accordance with Art. 153(4) EPC

(43) Date of publication:
**03.11.2021 Bulletin 2021/44**

(51) Int Cl.:
***B25J 19/06*** (2006.01)

(21) Application number: **20747901.5**

(22) Date of filing: **03.02.2020**

(86) International application number:
**PCT/CN2020/074241**

(87) International publication number:
**WO 2020/156582 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2019 CN 201910099512**

(71) Applicant: **Siemens Aktiengesellschaft**
**80333 München (DE)**

(72) Inventors:
• **LI, Ji**
**Beijing 100013 (CN)**

• **FAN, Shunjie**
**Beijing 100096 (CN)**
• **SUN, Zhaojun**
**Qingdao, Shandong 266550 (CN)**
• **YANG, Zhanbin**
**Beijing 100102 (CN)**
• **WANG, Hongwei**
**Beijing 100052 (CN)**
• **LIU, Jiangbo**
**Qingdao, Shandong 266000 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **FIRE-FIGHTING ROBOT AND CONTROL METHOD THEREOF**

(57) A fire-fighting robot and a control method thereof. The fire-fighting robot comprises: a pose sensing device used to sense a pose of a fire-fighting robot so as to obtain pose information associated with the pose of the fire-fighting robot; and a control device used to adjust, according to the pose information, a center of gravity of the fire-fighting robot to an anti-tipping position. The invention can prevent a fire-fighting robot from tipping over, thereby improving the reliability of the fire-fighting robot.

Figure 1

**Description**

**TECHNICAL FIELD**

The present invention relates to a fire-fighting robot and a control method thereof.

**BACKGROUND OF THE INVENTION**

Currently, fire-fighting robots have been widely used in fire-fighting and rescue. Fire-fighting robots usually comprise some sensors and devices, such as explosion-proof cameras, temperature sensors, water cannons, etc. The controller of a fire-fighting robot is interfaced with these sensors and devices, so that the controller can run complex algorithms to control them. Therefore, conventional programmable logic controllers (PLCs) and microprogram control units (MCUs) may not be applicable as the controller of fire-fighting robots due to their performance and other reasons.
In addition, the explosion-proof camera comprised in a fire-fighting robot can monitor the environment around the fire-fighting robot. An explosion-proof camera is usually installed on one side of a fire-fighting robot. When a fire-fighting robot is walking on a non-flat surface, the installation position and the large weight of the explosion-proof camera may cause the fire-fighting robot to tip over unexpectedly.

**BRIEF SUMMARY OF THE INVENTION**

The present invention aims to solve the above and/or other technical problems and to provide a fire-fighting robot and a control method thereof.
According to an exemplary embodiment, a fire-fighting robot comprises: a pose sensing device, constructed to sense the pose of the fire-fighting robot to obtain pose information related to the pose of the fire-fighting robot; and a control device, constructed to, based on the pose information, adjust the center of gravity of the fire-fighting robot to an anti-tipping position.
The fire-fighting robot further comprises: a main body; a water cannon, movably installed on the main body; and an explosion-proof camera, movably installed on the main body.
The control device comprises a self-balancing unit, constructed to determine the position of the center of gravity of the fire-fighting robot based on the position of the center of gravity of the main body, the position of the center of gravity of the water cannon, and the position of the center of gravity of the explosion-proof camera.
The self-balancing unit is further constructed to determine the allowable tilt angle of the fire-fighting robot based on the determined position of the center of gravity of the fire-fighting robot, wherein the allowable tilt angle is smaller than or equal to the minimum angle between the fire-fighting robot and the horizontal plane when the fire-fighting robot falls over.
The self-balancing unit is further constructed to determine the tilt angle of the fire-fighting robot based on the pose information, wherein, when the self-balancing unit determines that the tilt angle of the fire-fighting robot is greater than the allowable tilt angle corresponding to the position of the center of gravity of the fire-fighting robot, the self-balancing unit controls at least one of the movement of the water cannon and the movement of the explosion-proof camera, thereby adjusting the position of the center of gravity of the fire-fighting robot to an anti-tipping position, wherein the allowable tilt angle corresponding to the anti-tipping position is greater than or equal to the tilt angle of the fire-fighting robot.
The pose sensing device comprises an inertial measurement unit (IMU) .
According to another exemplary embodiment, a control method for fire-fighting robots comprises: sensing the pose of the fire-fighting robot to obtain pose information related to the pose of the fire-fighting robot; and, based on the pose information, adjusting the center of gravity of the fire-fighting robot to an anti-tipping position.
The fire-fighting robot comprises a main body, a water cannon movably installed on the main body, and an explosion-proof camera movably installed on the main body, wherein the step for adjusting the center of gravity comprises: determining the position of the center of gravity of the fire-fighting robot based on the position of the center of gravity of the main body, the position of the center of gravity of the water cannon, and the position of the center of gravity of the explosion-proof camera.
The step for adjusting the center of gravity further comprises: determining the allowable tilt angle of the fire-fighting robot based on the determined position of the center of gravity of the fire-fighting robot, wherein the allowable tilt angle is smaller than or equal to the minimum angle between the fire-fighting robot and the horizontal plane when the fire-fighting robot falls over.
The step for adjusting the center of gravity further comprises: determining the tilt angle of the fire-fighting robot based on the pose information, wherein, when the self-balancing unit determines that the tilt angle of the fire-fighting robot is greater than the allowable tilt angle corresponding to the position of the center of gravity of the fire-fighting robot, the self-balancing unit controls at least one of the movement of the water cannon and the movement of the explosion-proof camera, thereby adjusting the position of the center of gravity of the fire-fighting robot to an anti-tipping position, wherein the allowable tilt angle corresponding to the anti-tipping position is greater than or equal to the tilt angle of the fire-fighting robot.

According to the exemplary embodiments, the fire-fighting robot and the control method thereof can adjust the center of gravity in real time based on the current pose of the fire-fighting robot, thereby preventing the fire-fighting robot from overturning. Therefore, stability and reliability of the fire-fighting robot can be improved.

**BRIEF DESCRIPTION OF THE DRAWINGS**

The following drawings are only intended to illustrate and explain the present invention schematically, and do not limit the scope of the present invention. In the drawings,

Figure 1 is a schematic block diagram of the fire-fighting robot according to an exemplary embodiment;

Figure 2 is a perspective view of the fire-fighting robot according to an exemplary embodiment;

Figure 3 is a schematic diagram of the allowable tilt angle of the fire-fighting robot according to an exemplary embodiment;

Figure 4 is a schematic block diagram of the operation of adjusting the center of gravity of the fire-fighting robot according to an exemplary embodiment;

Figure 5 is a flowchart of the control method for the fire-fighting robot according to an exemplary embodiment.

Reference numerals in the drawings:

100    Main body
310    Water cannon
330    Explosion-proof camera
500    Pose sensing device
700    Control device
710    Self-balancing unit

**DETAILED DESCRIPTION OF THE EMBODIMENTS**

In order to have a clearer understanding of the technical features, purpose and effects of the present invention, the specific embodiments of the present invention will be described below with reference to the drawings.

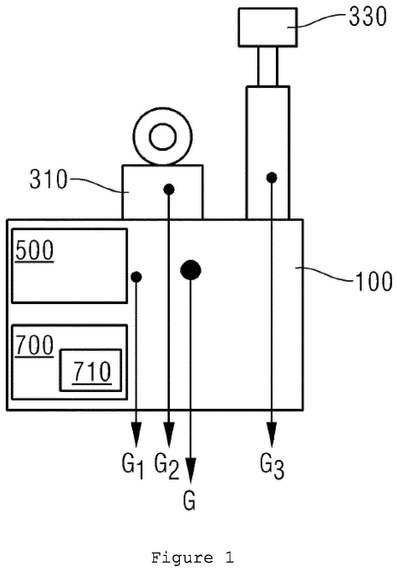

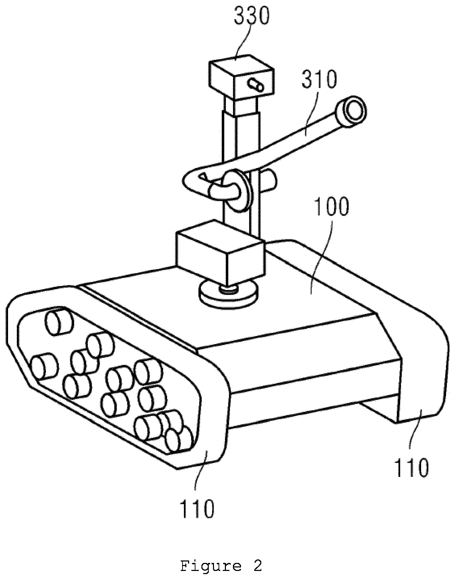

Figure 1 is a schematic block diagram of the fire-fighting robot according to an exemplary embodiment, and Figure 2 is a perspective view of the fire-fighting robot according to an exemplary embodiment. As shown in Figure 1 and Figure 2, the fire-fighting robot according to an exemplary embodiment may comprise a main body 100. The main body 100 may be a motion platform of the fire-fighting robot, and may be used to install various functional components 310 and 330 of the fire-fighting robot. With reference to Figure 2, the water cannon 310, the explosion-proof camera 330, etc. can be installed at different positions on the main body 100. In addition, the main body 100 may further comprise a walking device 110, and other devices such as an energy source (for example, a power supply) for providing energy for the operation of the fire-fighting robot, a driving device for driving the water cannon 310, the explosion-proof camera 330, the walking device 110, etc., and a communication device for communicating with the outside (not shown).

Moreover, the fire-fighting robot according to an exemplary embodiment may further comprise a pose sensing device 500 and a control device 700. The pose sensing device 500 and the control device 700 may be installed in the main body 100, and therefore are not shown in Figure 2. The pose sensing device 500 can sense (for example, sense in real time) the pose of the fire-fighting robot, and can obtain pose information related to the pose of the fire-fighting robot. In an exemplary embodiment, the pose sensing device 500 may comprise an inertial measurement unit (IMU). The IMU can sense the angular motion information and linear motion information of the fire-fighting robot, such as acceleration, angular velocity, angular acceleration, etc., and can use this information as pose information related to the pose of the fire-fighting robot.

The control device 700 can control multiple components of the fire-fighting robot, such as the water cannon 310, the explosion-proof camera 330, etc. For example, the water cannon 310 and the explosion-proof camera 330 may be installed such that they can move relative to the main body 100. The control device 700 can control the water cannon 310 and the explosion-proof camera 330 to move relative to the main body 100, thereby changing the positions of the water cannon 310 and the explosion-proof camera 330 relative to the main body 100.

The control device 700 can also receive pose information from the pose sensing device 500, and can control the center of gravity of the fire-fighting robot based on the pose information. In this way, when the movement of the fire-fighting robot causes the fire-fighting robot to tilt and thus may cause the fire-fighting robot to tip over, the control device 700 can determine that the fire-fighting robot is tilted and may tip over based on the pose information provided by the pose sensing device 500. At this point, the control device 700 can, for example, control the water cannon 310 and the explosion-proof camera 330 to move relative to the main body 100, so that the center of gravity of the fire-fighting robot can be adjusted to an anti-tipping position to prevent the fire-fighting robot from tipping over.

For this, the control device 700 may comprise a self-balancing unit 710, as shown in Figure 1. The self-balancing unit 710 can obtain the position of the center of gravity of the fire-fighting robot. Specifically, the self-balancing unit 710 can firstly determine the position of the center of gravity of the fire-fighting robot based on the position of the center of gravity of the main body 100, the position of the center of gravity of the water cannon 310, the position of the center of gravity of the explosion-proof camera 330, and/or the position of the center of gravity of other components comprised in the fire-fighting robot. Here, the control device 700 can control the water cannon 310 and the explosion-proof camera 330 to move relative to the main body 100, and can therefore record or store the positions of the water cannon 310 and the explosion-proof camera 330 relative to the main body 100, to be used respectively as the position information of the water cannon and of the explosion-proof camera. For example, the control device 700 or the self-balancing unit 710 may comprise a water cannon movement control unit, an explosion-proof camera movement control unit, and a storage unit (not shown). In addition, the control device 700 or the self-balancing unit 710 may also store in advance the position of the center of gravity G2 of the water cannon 310 relative to the water cannon 310 and the position of the center of gravity G3 of the explosion-proof camera 330 relative to the explosion-proof camera 330. Therefore, the self-balancing unit 710 can determine the position of the center of gravity G2 of the water cannon 310 relative to the main body 100 based on the position of the water cannon 310 relative to the main body 100 and the position of the center of gravity G2 of the water cannon 310 relative to the water cannon 310, and the position of the center of gravity G3 of the water cannon 310 relative to the main body 100 based on the position of the explosion-proof camera 330 relative to the main body 100 and the position of the center of gravity G3 of the explosion-proof camera 330 relative to the explosion-proof camera. In addition, the control device 700 or the self-balancing unit 710 may also store in advance the position of the center of gravity G1 of the main body 100 relative to the main body 100. Therefore, the control device 700 can determine the position of the center of gravity G of the fire-fighting robot relative to the main body 100 based on the position of the center of gravity G1 of the main body 100 relative to the main body 100, the position of the center of gravity G2 of the water cannon 310 relative to the main body 100, and the position of the center of gravity G3 of the explosion-proof camera 330 relative to the main body 100.

$$G_0(x_0 + y_0 + z_0) = \frac{G_1(x_1 + y_1 + z_1) + G_2(x_2 + y_2 + z_2) + G_3(x_3 + y_3 + z_3)}{G_1 + G_2 + G_3}$$

In the above formula, $G_0$ is the weight of the fire-fighting robot, $G_1$ is the weight of the main body 100, $G_2$ is the weight of the water cannon 310, $G_3$ is the weight of the explosion-proof camera, $(x_0, y_0, z_0)$ is the position of the center of gravity G of the fire-fighting robot in a space rectangular coordinate system established relative to the main body 100, $(x_1, y_1, z_1)$ is the position of the center of gravity $G_1$ of the main body 100 in the space rectangular coordinate system established relative to the main body 100, $(x_2, y_2, z_2)$ is the position of the center of gravity $G_2$ of the water cannon 310 in the space rectangular coordinate system established relative to the main body 100, and $(x_3, y_3, z_3)$ is the position of the center of gravity $G_3$ of the explosion-proof camera 330 in the space rectangular coordinate system established relative to the main body 100. In an exemplary embodiment, the weight $G_1$ and the position of the center of gravity $(x_1, y_1, z_1)$ of the main body 100 (i.e., the motion platform of the fire-fighting robot) are fixed values. The explosion-proof camera 330 can be fixed horizontally relative to the main body, and can move vertically relative to the main body under the action of a motor, so that the position $(x_3, y_3, z_3)$ of the center of gravity $G_3$ of the explosion-proof camera 330 can be determined based on the operating status of the motor and the initial position of the explosion-proof camera. The water cannon 310 can be installed on the main body, and can swing under the action of two motors, so that the position $(x_2, y_2, z_2)$ of the center of gravity $G_2$ of the water cannon 310 can be determined based on the operating status of the two motors and the initial position of the water cannon 310.

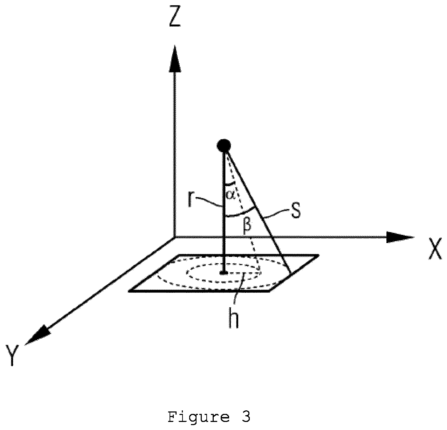

Then, the self-balancing unit 710 can determine the allowable tilt angle of the fire-fighting robot based on the determined position of the center of gravity of the fire-fighting robot. The allowable tilt angle can be smaller than or equal to the minimum angle between the fire-fighting robot and the horizontal plane when it overturns. Figure 3 is a schematic diagram of the allowable tilt angle of the fire-fighting robot according to an exemplary embodiment. As shown in Figure 3, the bottom surface or the projection of the bottom surface of the fire-fighting robot on the horizontal plane can be located in the plane defined by the x-axis and the y-axis. r stands for the distance between the center of gravity G of the fire-fighting robot determined by the self-balancing unit 710 and the bottom surface of the fire-fighting robot or the projection of the bottom surface on the horizontal plane, and s stands for the distance between the center of gravity G and the edge of the bottom surface of the fire-fighting robot or the projection of the bottom surface on the horizontal plane. β is the angle formed by r and s. Here, β can be determined as the allowable tilt angle of the fire-fighting robot, i.e., when the tilt angle of the fire-fighting robot is greater than β, the fire-fighting robot may fall over. Optionally, α smaller than β can be determined as the allowable tilt angle of the fire-fighting robot, so that the self-balancing unit 710 can adjust the center of gravity when the tilt angle of the fire-fighting robot has not reached β. Therefore, reliability can be improved.

In an exemplary embodiment, the control unit 700 or the self-balancing unit 710 may store in advance a look-up table that records the correlation between the position of the center of gravity of the fire-fighting robot and the allowable tilt angle corresponding to the position of the center of gravity. In the exemplary embodiment, the self-balancing unit 710 can determine the allowable tilt angle corresponding to a position of the center of gravity based on the determined position of the center of gravity of the fire-fighting robot by use of the look-up table stored in advance.

Then, the self-balancing unit 710 can determine the tilt angle of the fire-fighting robot based on the pose information, and can determine whether the tilt angle of the fire-fighting robot is greater than the allowable tilt angle. Here, the tilt angle of the fire-fighting robot refers to the angle between the fire-fighting robot and the horizontal plane when it is in the current pose. In an exemplary embodiment, the pose information may be the information sensed by the IMU. Because the tilt angle relative to the direction of gravity determined on the basis of the information sensed by the IMU is known, a detailed description of the known content is omitted here in order to avoid redundancy.

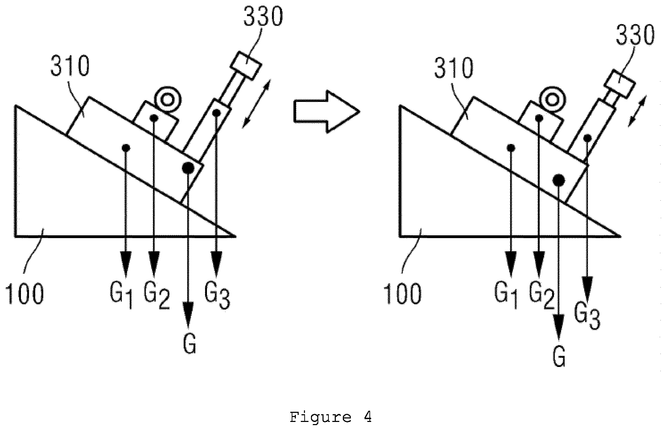

When the self-balancing unit 710 determines that the tilt angle of the fire-fighting robot is greater than the allowable tilt angle, the self-balancing unit 710 can adjust the center of gravity of the fire-fighting robot to an anti-tipping position. A detailed description will be provided below with reference to Figure 4.

Figure 4 is a schematic block diagram of the operation of adjusting the center of gravity of the fire-fighting robot according to an exemplary embodiment. As shown in Figure 4, the fire-fighting robot can move to a position that is inclined relative to the ground or the horizontal plane and therefore is in the pose as shown in the drawing. At this point, the self-balancing unit 710 can, as described above, determine the position of the center of gravity G of the fire-fighting robot based on the position of the center of gravity G1 of the main body, the position of the center of gravity G2 of the water cannon, and the position of the center of gravity G3 of the explosion-proof camera. Then, the self-balancing unit 710 can determine the allowable tilt angle based on the position of the center of gravity G, and can determine the current tilt angle of the fire-fighting robot based on the pose information. As shown in the left part of Figure 4, the self-balancing unit 710 can determine that the current tilt angle of the fire-fighting robot is greater than the allowable tilt angle. At this point, the self-balancing unit 710 can control the water cannon 310 to move to the anti-tipping position of the water cannon and the explosion-proof camera 330 to move to the anti-tipping position of the anti-explosion camera, thereby adjusting the center of gravity of the fire-fighting robot to an anti-tipping position. As shown in Figure 4, the self-balancing unit 710 can control the explosion-proof camera 330 to move relative to the main body 100 to change the position of the center of gravity G3 of the explosion-proof camera 330, so that, for example, the explosion-proof camera 330 moves toward the main body 110, as shown in the right part of Figure 4. In this way, the position of the center of gravity of the fire-fighting robot can be adjusted by changing the position of the center of gravity of the explosion-proof camera 330 and/or the water cannon 310 until the allowable tilt angle corresponding to the adjusted position of the center of gravity of the fire-fighting robot is greater than or equal to the current tilt angle of the fire-fighting robot, as shown in the right part of Figure 4.

According to an exemplary embodiment, the control device 700 and/or the self-balancing unit 710 may be implemented as one or more programmable logic controllers, and one or more of the control units in the control device 700 as described in the context can be implemented by running the corresponding algorithm(s) or program(s) by the control device 700 implemented as one or more programmable logic controllers. Here, in order to meet the control requirements for the various components of the fire-fighting robot, the control device 700 may have the ability to perform complex computing. For this, the control device 700 may comprise, for example, the Siemens Open Controller from Siemens.

According to the exemplary embodiment, the fire-fighting robot can adjust the center of gravity in real time based on its current pose, thereby preventing the fire-fighting robot from overturning. However, the exemplary embodiment is not limited thereto. In other exemplary embodiments, a method for controlling the fire-fighting robot may also be provided.

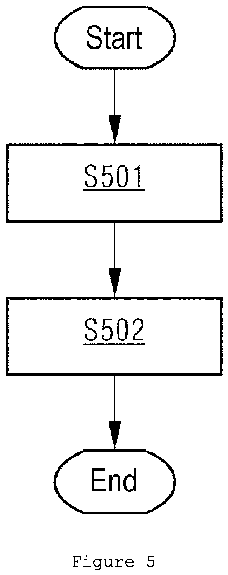

Figure 5 is a flowchart of the control method for the fire-fighting robot according to an exemplary embodiment. The control method according to the present exemplary embodiment may be implemented by the fire-fighting robot described above with reference to Figures 1 to 4. Therefore, for brevity, descriptions of the same or similar features will be omitted.

As shown in Figure 5, firstly, in operation S501, the pose of the fire-fighting robot can be sensed to obtain the pose information related to the pose. Here, the pose can be sensed by a pose sensing device installed on the fire-fighting robot. For example, the pose sensing device may comprise an IMU.

When the pose information is obtained, the center of gravity of the fire-fighting robot can be adjusted to an anti-tipping position based on the pose information in operation S502. For example, the fire-fighting robot may comprise components such as a main body, a water cannon, an explosion-proof camera, etc. The water cannon and the explosion-proof camera may be installed on the main body and can move relative to the main body. Therefore, the position of the center of gravity of the fire-fighting robot can be adjusted by controlling the positions of the water cannon and explosion-proof camera relative to the main body.

Specifically, firstly, the position of the center of gravity of the fire-fighting robot can be determined based on the position of the center of gravity of the main body, the position of the center of gravity of the water cannon, and the position of the center of gravity of the explosion-proof camera. When the position of the center of gravity of the robot is determined, the allowable tilt angle can be determined based on the position of the center of gravity of the fire-fighting robot. Here, the allowable tilt angle can be defined as smaller than or equal to the minimum angle between the fire-fighting robot and the horizontal plane when it overturns. Therefore, the allowable tilt angle may depend on the current position of the center of gravity of the fire-fighting robot, and may be calculated in real time as described above with reference to Figure 3. Alternatively, a look-up table indicating the correlation between the position of the center of gravity of the fire-fighting robot and the allowable tilt angle can be stored in advance.

At the same time, the tilt angle of the fire-fighting robot can be determined based on the pose information. For example, the tilt angle can be determined based on various information sensed by the IMU.

Then, it can be determined whether the tilt angle of the fire-fighting robot is greater than the allowable tilt angle corresponding to the position of the center of gravity of the fire-fighting robot. When it is determined that the tilt angle of the fire-fighting robot is greater than the allowable tilt angle corresponding to the position of the center of gravity of the fire-fighting robot, the movement of the water cannon and/or the movement of the explosion-proof camera can be controlled, thereby adjusting the position of the center of gravity of the fire-fighting robot to an anti-tipping position. Here, an anti-tipping position may be defined as being such that the allowable tilt angle corresponding to the anti-tipping position is greater than or equal to the tilt angle of the fire-fighting robot.

According to the exemplary embodiments, the fire-fighting robot and the control method thereof can adjust the center of gravity in real time based on the current pose of the fire-fighting robot, thereby preventing the fire-fighting robot from overturning. Therefore, stability and reliability of the fire-fighting robot can be improved.

According to one embodiment, a program product such as a non-transient machine-readable medium is provided. The non-transient machine-readable medium may have instructions (i.e., the above-mentioned elements implemented in the form of software) that, when executed by a machine, cause the machine to perform the various operations and functions described above in the embodiments of the present application with reference to Figure 5.

According to one embodiment, a computer program is provided, comprising computer-executable instructions, which, when executed, cause at least one processor to perform the various operations and functions described above in the embodiments of the present application with reference to Figure 5.

It should be understood that, although this description is based on various embodiments, it is by no means the case that each embodiment contains only one independent technical solution. This way of description is only for clarity, and those skilled in the art should regard the description as a whole. The technical solutions in each embodiment can also be appropriately combined to form other implementations that can be understood by those skilled in the art.

The above are only illustrative specific embodiments of the present invention, and are not intended to limit the scope of the present invention. Any equivalent changes, modifications and combinations made by anyone skilled in the art without departing from the concept and principle of the present invention shall fall within the scope of the present invention.

**Claims**

1.  A fire-fighting robot, **characterized in that** the fire-fighting robot comprises:

    a pose sensing device (500), constructed to sense the pose of the fire-fighting robot to obtain pose information related to the pose of the fire-fighting robot; and
    a control device (700), constructed to adjust the center of gravity of the fire-fighting robot to an anti-tipping position based on the pose information.

2.  The fire-fighting robot as claimed in claim 1, **characterized in that** the fire-fighting robot further comprises:

    a main body (100);

a water cannon (310), installed on the main body such that it can move relative to the main body (100); and an explosion-proof camera (330), installed on the main body such that it can move relative to the main body (100).

3. The fire-fighting robot as claimed in claim 2, **characterized in that** the control device comprises:
a self-balancing unit (710), constructed to determine the position of the center of gravity of the fire-fighting robot based on the position of the center of gravity of the main body, the position of the center of gravity of the water cannon, and the position of the center of gravity of the explosion-proof camera.

4. The fire-fighting robot as claimed in claim 3, **characterized in that** the self-balancing unit is further constructed to determine the allowable tilt angle of the fire-fighting robot based on the determined position of the center of gravity of the fire-fighting robot, wherein the allowable tilt angle is smaller than or equal to the minimum angle between the fire-fighting robot and the horizontal plane when the fire-fighting robot falls over.

5. The fire-fighting robot as claimed in claim 3, **characterized in that** the self-balancing unit is further constructed to determine the tilt angle of the fire-fighting robot based on the pose information, wherein, when the self-balancing unit determines that the tilt angle of the fire-fighting robot is greater than the allowable tilt angle corresponding to the position of the center of gravity of the fire-fighting robot, the self-balancing unit controls at least one of the movement of the water cannon and the movement of the explosion-proof camera, thereby adjusting the position of the center of gravity of the fire-fighting robot to an anti-tipping position, wherein the allowable tilt angle corresponding to the anti-tipping position is greater than or equal to the tilt angle of the fire-fighting robot.

6. The fire-fighting robot as claimed in claim 1, **characterized in that** the pose sensing device comprises an inertial measurement unit (IMU).

7. A control method for the fire-fighting robot, **characterized in that** the method comprises:

   sensing the pose of the fire-fighting robot to obtain pose information related to the pose of the fire-fighting robot; and
   adjusting the center of gravity of the fire-fighting robot to an anti-tipping position based on the pose information.

8. The method as claimed in claim 7, **characterized in that** the fire-fighting robot comprises a main body, a water cannon movably installed on the main body, and an explosion-proof camera movably installed on the main body, wherein the step for adjusting the center of gravity comprises:
determining the position of the center of gravity of the fire-fighting robot based on the position of the center of gravity of the main body, the position of the center of gravity of the water cannon, and the position of the center of gravity of the explosion-proof camera.

9. The method as claimed in claim 8, **characterized in that** the step for adjusting the center of gravity further comprises:
determining the allowable tilt angle of the fire-fighting robot based on the determined position of the center of gravity of the fire-fighting robot, wherein the allowable tilt angle is smaller than or equal to the minimum angle between the fire-fighting robot and the horizontal plane when the fire-fighting robot falls over.

10. The method as claimed in claim 9, **characterized in that** the step for adjusting the center of gravity further comprises:
determining the tilt angle of the fire-fighting robot based on the pose information, wherein, when the self-balancing unit determines that the tilt angle of the fire-fighting robot is greater than the allowable tilt angle corresponding to the position of the center of gravity of the fire-fighting robot, the self-balancing unit controls at least one of the movement of the water cannon and the movement of the explosion-proof camera, thereby adjusting the position of the center of gravity of the fire-fighting robot to an anti-tipping position, wherein the allowable tilt angle corresponding to the anti-tipping position is greater than or equal to the tilt angle of the fire-fighting robot.

11. A non-transient machine-readable medium, **characterized in that** the non-transient machine-readable medium stores instructions that can be executed by a computer, which, when executed, cause at least one processor to execute the method according to any of claims 7 - 10.

12. A computer program, **characterized in that** the computer program comprises instructions that can be executed by a computer, which, when executed, cause at least one processor to execute the method according to any of claims 7 - 10.

Figure 1

Figure 2

Figure 3

Figure 4

Start

S501

S502

End

Figure 5

## INTERNATIONAL SEARCH REPORT

| International application No. |
| --- |
| **PCT/CN2020/074241** |

| A. | CLASSIFICATION OF SUBJECT MATTER |
| --- | --- |
| | B25J 19/06(2006.01)i |

According to International Patent Classification (IPC) or to both national classification and IPC

| B. | FIELDS SEARCHED |
| --- | --- |

Minimum documentation searched (classification system followed by classification symbols)

B25J

Documentation searched other than minimum documentation to the extent that such documents are included in the fields searched

Electronic data base consulted during the international search (name of data base and, where practicable, search terms used)

CNPAT, CNKI, EPODOC, WPI: 消防, 机器人, 姿态, 重心, 调节, 翻倒, fire protection, robot, pose, mass center, adjust, overturn

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106272564 A (HONGFUJIN PRECISION INDUSTRY (SHENZHEN) CO., LTD. et al.) 04 January 2017 (2017-01-04) description, paragraphs 4-20, and figure 1 | 1-12 |
| X | CN 108189918 A (BOE TECHNOLOGY GROUP CO., LTD.) 22 June 2018 (2018-06-22) description, paragraphs 29-86, and figures 1-4 | 1-12 |
| A | CN 107932470 A (TAIZHOU HAIBO AUTOMOBILE TECHNOLOGY CO., LTD.) 20 April 2018 (2018-04-20) entire document | 1-12 |
| A | US 2011168460 A1 (GOLDENBERG, A.A. et al.) 14 July 2011 (2011-07-14) entire document | 1-12 |
| A | CN 202459915 U (SHANGHAI WUJIN FIRE FIGHTING SAFETY EQUIPMENT CO., LTD. et al.) 03 October 2012 (2012-10-03) entire document | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 April 2020** | **28 April 2020** |

| Name and mailing address of the ISA/CN | Authorized officer |
| --- | --- |
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/074241**

| Patent document cited in search report | | | Publication date (day/month/year) | Patent family member(s) | | | Publication date (day/month/year) |
|---|---|---|---|---|---|---|---|
| CN | 106272564 | A | 04 January 2017 | US | 2016347385 | A1 | 01 December 2016 |
| CN | 108189918 | A | 22 June 2018 | CN | 108189918 | B | 22 November 2019 |
| CN | 107932470 | A | 20 April 2018 | None | | | |
| US | 2011168460 | A1 | 14 July 2011 | WO | 2011085498 | A1 | 21 July 2011 |
| | | | | CN | 102802881 | A | 28 November 2012 |
| | | | | CN | 102802881 | B | 16 December 2015 |
| | | | | CA | 2787136 | A1 | 21 July 2011 |
| | | | | US | 8360178 | B2 | 29 January 2013 |
| | | | | CA | 2787136 | C | 13 December 2016 |
| | | | | IN | 201201953 | P3 | 20 December 2013 |
| CN | 202459915 | U | 03 October 2012 | None | | | |

Form PCT/ISA/210 (patent family annex) (January 2015)